# EUROPEAN PATENT APPLICATION

(11) **EP 1 313 271 A1**
(43) Date of publication of application: **21.05.2003**
(21) Application number: 02024415.8
(22) Date of filing: 28.10.2002
(51) Int. Cl.: H04L 12/56

(54) **Method and router for limiting client connections to a server**

(30) Priority: 01.11.2001 JP 2001336798
(71) Applicant: FUJITSU LIMITED, Kawasaki-shi, Kanagawa 211-8588 (JP)
(72) Inventor: Nomura, Yuji, Kawasaki-shi, Kanagawa 211-8588 (JP); Kurose, Yoshitoshi, Kawasaki-shi, Kanagawa 211-8588 (JP)
(74) Representative: HOFFMANN - EITLE

(57) **Abstract**

A router in a network routes an input packet based on a destination address of the packet. The router, upon reception of a packet regarding a connection between a server and a client, determines whether or not to grant a connection to the server based on a set of criteria. If determined that a connection is possible, a message is transmitted for reserving bandwidth between two routers which are used for relaying packets between the client and the server.

## Description

### FIELD OF THE INVENTION

The present invention relates to a method and a router for executing a connection process upon reception of a packet regarding a connection between a client and a server. Particularly the present invention relates to a method and a router for limiting client connections to a server to an upper limit value and also for executing bandwidth reservation in a network.

### BACKGROUND OF THE INVENTION

In recent years, it is investigated that a service provider stores the contents provided by a contents provider to a home storage of a home network via a network, thereby a viewer can watch the contents whenever he wants by utilizing such home storage and a viewer can control the contents provided by a broadcast company or the like.

Moreover, it is also requested to provide on-demand video and music contents on a real-time basis and to provide the contents of high communication quality through an IP (Internet Protocol) network. However, a company which reserves bandwidth for each client does not yet exist as a provider which distributes the contents via this IP network.

In the case of providing contents on an on-demand basis, the number of clients to be connected to the server which distributes music or video contents is limited. This number of clients often depends on the capability of the server (mainly, arithmetic processing rate of the CPU, access time to a contents storage medium or the like) and the maximum number of clients which the server can connect has an upper limit value which is restricted by the server capability.

Therefore, a server capability management apparatus is provided in some cases in order to limit the maximum number of client connections within such an upper limit value. The server capability management apparatus has a function to limit (reject) the connection requests of clients exceeding the upper limit value by monitoring the number of connections between the server and clients.

Moreover, the server is also provided with a function to monitor the CPU utilization rate of the server. Thereby, the server capability management apparatus receives, from such a monitoring function, information regarding the CPU utilization rate of the server during periodic intervals. When the CPU utilization rate has exceeded a predetermined upper limit value, the server capability management apparatus rejects the connection request from a client. When the CPU utilization rate is not greater than the upper limit value, the server capability management apparatus allows connections.

As explained above, the number of client connections is limited through consideration of the server load by the method explained above and thereby deterioration of communication quality of the contents provided from the server is prevented.

In such a communication embodiment, it is possible to prevent the server to be placed in an over-load condition by limiting the maximum number of connections to the server from the clients, but it is impossible to provide a sure guarantee of the communication quality between the server and clients. Namely, a problem that communication quality of the communication network between the server and clients is not yet guaranteed is still left unsolved.

Usually, the clients and server can be assumed to have a connection embodiment of: client <--> first edge router <--> core router <--> second edge router<--> server. Here, "<-->" indicates a mutual connection.

Moreover, in the communication embodiment in the short distance, a core router is not used in some cases. Each edge router is also called an edge node.

In this communication embodiment, as an example, the connection path between clients and a first edge node, is an access link or an access network such as xDSL (x Digital Subscriber Line) or FTTH (Fiber To The Home) or the like. This may be thought to be similar to a private line for which a certain bandwidth is assured depending on a contract. Meanwhile, when the upper limit value of the clients to be accommodated is limited between the server and the second edge router, the necessary maximum bandwidth can be obtained through the private line.

However, various packets are transferred between the first and second edge routers and the packets are transferred to the next hop (router) based on the best effort. Accordingly, when the packet input is concentrated to a certain router, for example, the core router, from other clients and the other servers or the like, packet transfer delay (including jitter or the like) or packet abortion is generated in this router.

The communication quality between the first and second edge nodes can no longer be assured because of such transfer delay and packet abortion.

Therefore, here rises a problem that it is difficult, on the client side, to monitor the video data and audio data transmitted from the contents server without a stress due to deterioration of communication quality (transfer delay or packet abortion or the like). Moreover, when the maximum number of client connections in connection to the server after a reservation of communication quality exceeds the upper limit value, here rises a problem that the communication bandwidth obtained must not be used and released.

### SUMMARY OF THE INVENTION

In view of solving the problems explained above, an object of the present invention is to provide a method and a router for limiting each packet flow transferred between the server and clients to an upper limit value of the number of client connections in communication between the server and a client, and moreover to provide a method and a router for reserving bandwidth between a client and a server for communication when the router judges a connection between the server and the client is possible.

Another object of the present invention is to provide a router which can set or change the maximum number of client connections to be connectable to the server by remote control.

A router of the present invention is characterized in comprising a connection judging unit for judging whether the number of connections exceeds an upper limit value of clients to be connectable to the server or not upon reception of a packet regarding a connection between the server and a client, and a path setting unit for transmitting a message for reserving bandwidth between the router and another router for relaying a packet between the client and the server when the connection judging unit judges that the connection is possible.

Moreover, the router according to another embodiment of the present invention includes a server connection management unit provided for management of the upper limit value of client connections for each server and a terminal control unit for receiving a command to display the maximum number of client connections of the server designated from a console terminal, and displaying, to the console terminal, the upper limit value of connections of the designated server from the server connection management unit.

Moreover, the router according to another embodiment of the present invention includes a server connection management unit provided for management of the upper limit value of client connections for each server and a terminal control unit for receiving a command to change the maximum number of client connections of the server designated from a console terminal and updating the maximum number of client connections to the upper limit value of connections of the designated server of the server connection management unit.

Moreover, the router according to another embodiment of the present invention includes an acknowledgment packet detecting unit for detecting an acknowledgment packet from a server for allowing a client connection to the server and a connection judging unit for judging whether the number of connections exceeds or not the upper limit value of clients to be connected by the server, upon reception of the acknowledgment packet.

Moreover, a method for connecting a server and clients according to another embodiment of the present invention is characterized by transmitting an acknowledgment packet from a server to a client; judging whether the number of connections exceeds or not the upper limit value of clients to be connectable to the server, upon reception of a packet regarding a connection between the server and the client; and transmitting a message for reserving bandwidth among two routers for relaying the packet between the clients and the server when the connection is judged possible. Further a router may perform the judging.

### BRIEF DESCRIPTIOIN OF THE DRAWINGS

Fig. 1 is a diagram showing an example of the network constructions of the first and alternative embodiments;
Fig. 2 is a block diagram showing an example of construction of an edge router LSR (label switch router) of the first embodiment;
Fig. 3 is a diagram showing an example in which information for judging the possibility of a connection between the server and client of the first embodiment is displayed on the display area of the console terminal;
Fig. 4 is a diagram showing an example of a display of the information about a connection between the server and client of the first embodiment on the display area of the console terminal;
Fig. 5 is a diagram showing an example of the data storing format of the server connection management unit in the first embodiment;
Fig. 6 is a diagram showing an example of setting of the "compensated maximum number of connections of application" based on the traffic factor in the first embodiment;
Fig. 7 is a diagram showing an example of the process flow in the first embodiment;
Fig. 8 is a diagram showing an example of construction of the edge router LSR (label switch router) in alternative embodiments;
Fig. 9 is a diagram showing a data storing format of the client connection management unit in alternative embodiments;
Fig. 10 is a diagram showing an example of the process flow in alternative embodiments; and
Fig. 11 is a diagram showing an example of the data storing format of the server management unit in alternative embodiments.

### DETAILED DESCRIPTION OF THE PREFERRED EMBODIMENTS

The "reservation of bandwidth" appearing in this specification shall include at least assured bandwidth and/or allowable bandwidth and may also include delay assurance and delay/fluctuation assurance.

Like reference numerals used in this specification designate like elements or corresponding elements. Any one of the clients CL1 through CLn is called a client CL and any one of the servers SV1 through SVm is called a server SV. However, the client CL indicates the same apparatus unless otherwise particularly designated and the server SV also indicates the same apparatus.

### 1. First Embodiment

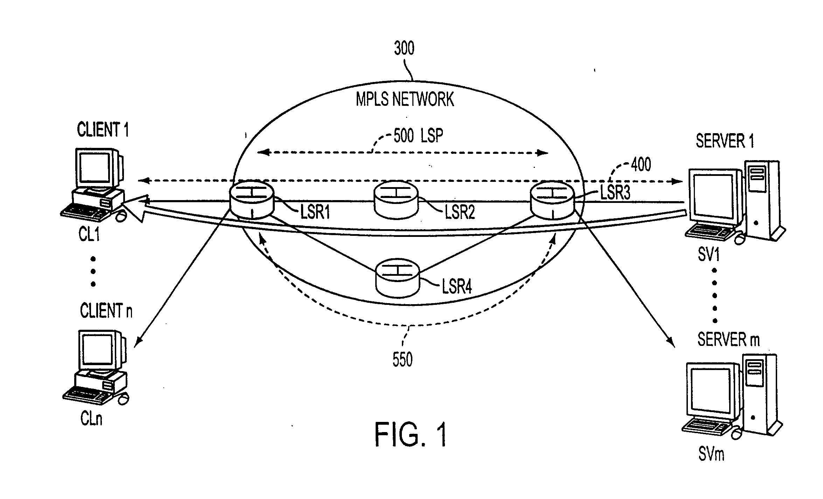

Fig. 1 shows an example of a network construction of the present invention. In this figure, the reference numerals CL1 through CLn designate clients and workstations which are used in general as examples of the clients. These clients may be directly accommodated by LSR1. Moreover, in another embodiment, these clients may also be accommodated via an access network. In another embodiment, one or more clients are accommodated by another edge router and this edge router may be accommodated in one network 300.

LSR1 and LSR3 designate the edge routers for accommodating the clients. LSR2 and LSR4 are core routers not accommodating the clients. SV1 through SVm are servers. Numeral 300 is an MPLS (Multi-protocol Label Switching) network. Numeral 400 is a packet flow between the client CL and the server SV. Numeral 500 is an LSP (Label Switch Path) via routers LSR1 -> LSR2 -> LSR 3 by MPLS. Numeral 550 is the LSP via routers LSR1 -> LSR4 -> LSR3.

In the network of the present invention, a signaling message of the MPLS (Multi-protocol Label Switching) is used for bandwidth reservation between the edge routers LSR1 and LSR3 and it is also assumed that a LSR (Label Switch Router) for processing the signaling message is installed to the edge routers LSR1 and LSR3. Moreover, it is also possible to install one or more LSRs, for example, one core router LSR2 between the edge routers LSR1 and LSR3.

Namely, the edge routers LSR1 and LSR3 are connected via the MPLS network 300. In this MPLS network 300, a route having a bandwidth allowance, for example, can also be automatically selected from a plurality of routes existing between the edge routers LSR1 and LSR3 by utilizing the CR-LDP (Constraint-based Routing-Label Distribution Protocol) for the label distribution.

Moreover, as another embodiment, it is possible to use the RSVP (resource ReSerVation Protocol) and bandwidth reservation can be realized in the same manner as the case of using the MPLS technique, by respectively providing the router which may be used by the RSVP to the edge routers LSR1, LSR3 and the core router LSR2.

In the case where a provider usually performs both-way communications such as distribution of contents of movies, live concerts and music programs or games using the packets, communication can be realized by utilizing an access link up to the first edge router (LSR) from the clients, from the first edge router (LSR) to the second edge router (LSR) via the core router (LSR) and moreover an access link up to the server from the second edge router or the access network. This link is usually assumed to use FTTH or xDSL, etc. and therefore it is also assumed that the constant communication quality is obtained depending on the contract. When the RSVP explained above is used, the bandwidth can be assured on an end-to-end basis. In other words, packet flow bandwidth reservation between the server and clients can be assured.

In the case where the second edge router is connected with the server via a private line (for example, Giga-bit Ethernet), bandwidth reservation of the access link and private line can be assured on the basis of the contract.

### 1.1 Outline of Operations of the Present Invention

Outline of operations of the present invention will be explained with reference to Fig. 1. An example of construction in the present invention consisting of the five major steps indicated below will be explained.
(a) A client CL (for example, CL1) transmits a packet (connection request packet) including a connection request message to the server SV (for example, SV1). This packet reaches the server SV via the LSP (Label Switch Path) 500 of the edge routers LSR1 to LSR3. The server SV performs authentication regarding the client CL and transmits a response message regarding permission or no-permission of connection to the client CL as the connection request source with inclusion in the response packet.
   In this case, it is also possible that the server SV transmits the response packet only when the connection request is permitted.
(b) Upon reception, from the server SV, of the response packet allowing the connection request from the client CL (hereinafter, referred to as the acknowledgment packet), the edge router LSR3 searches the number of clients connected at present to the server SV. When it is judged that further connections to the server SV are impossible the connection is not allowed. It is also possible that a response packet including a message to notify that a connection is impossible is transmitted to the client CL. Moreover, the edge router LSR3 may also transmit a packet including a message notifying that the connection is impossible to the server SV. Thereafter, the edge router LSR3 completes the process. In other words, the connection request exceeding the maximum number of connections to the server SV from the client CL is rejected.
(c) Next, the edge router LSR3 searches, when it is judged that further connection is possible by searching the present number of connections between the server SV and the clients, whether the necessary bandwidth reservation is possible or not between the edge router LSR3 and edge router LSR1. If this bandwidth reservation is impossible, the edge router LSR3 may transmit the response packet including a message notifying that "Connection is impossible" or "Bandwidth reservation is impossible" to the client CL as explained above.
   Moreover, the edge router LSR3 may transmit to the server a message notifying that the client CL cannot be connected to the server SV and thereafter the edge router LSR3 completes the process.
   Here, when any communication is not realized for a time longer than a predetermined period between the server SV and client CL, the communication resource regarding the bandwidth reservation can be released under the supposition that the client CL or server SV has canceled the communication.
(d) Next, when the bandwidth reservation is possible in item (c), the edge router LSR3 transmits a label request to the route up to the edge router LSR1 using the function of MPLS. A LSP (Label Switch Path) connection may be realized by receiving a label distribution in response to such a label request. At the time of LSP connection, the bandwidth reservation, for example, may be performed for communication quality. In this case, it is also possible to reserve a maximum allowable delay time. Moreover, for the streaming video application, the single-side bandwidth in the down direction to the client CL from the server SV may also be reserved. In addition, it is also possible to reserve both bandwidths for the up and down directions. In this case, different bandwidths may also be set for the up and down routes. Moreover, in the case of the both-way communication applications such as a battle game, desired both communication bandwidths of the up and down routes can be reserved. Furthermore, it is also possible to set the communication quality of the maximum allowable delay time in order to obtain quick response time.
(e) When the reservation of communication quality for LSP is completed, the response packet received from the server SV is transferred to the client CL as the request issuing source.

As explained above, the edge router LSR3 can dynamically acquire the communication quality (for example, necessary bandwidth when it is requested), upon reception of the acknowledgment packet from the server SV through the steps (a) to (e).

### 1.2 Detail Description of the Present Invention

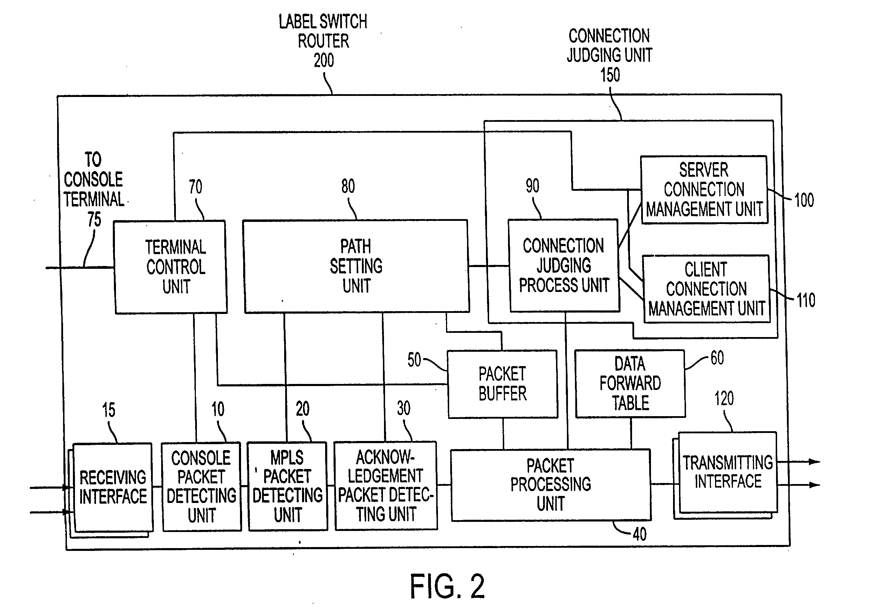

According to Fig. 1, the present invention can be realized with the edge router LSR3. The server to LSR3 is accommodated directly or indirectly via the access link or access network. Direct accommodation means the direct accommodation into the edge router LSR3 and indirect accommodation unit connection via the network of which communication quality (bandwidth or the like) is guaranteed. Fig. 2 shows an example of the construction of an edge router LSR (Label Switch Router) of the present invention. The edge router of the present invention can also be adapted to the edge router LSR1 shown in Fig. 1. In this case, the edge router LSR1 is requested to connect the LSP to the edge routers LSR1 to LSR3. A label switch router 200 (Fig. 2) is assumed to be provided with the function to support the MPLS function and also with a router function for routing the IP packet. Moreover, when the RSVP function which is a similar function to the MPLS function is used in place of such MPLS function, an MPLS packet detecting unit 20, a path setting process unit 80, a data forward table 60 and a packet buffer 50 which are incorporated with the MPLS function are also assumed to support the RSVP function. It is apparent for those who are skilled in this art that the above portion incorporated with the MPLS function of the present invention may be realized with the RSVP function.

### (1) Construction of Edge Router

Fig. 2 shows an example where the edge router LSR3 is constructed as the label switch router 200. The label switch router 200 receives the packets via a plurality of receiving interfaces 15. A console packet detecting unit 10 detects the packets transmitted from a console terminal (for example, work station or the like) connected theoretically from the packets transmitted from a plurality of such receiving interfaces 15 and transmits such packets to a terminal control unit 70. For the connection between the terminal control unit 70 and the console terminal, a line (or link) (including the telephone line, xDSL, FTTH or the like) 75 other than the MPLS network 300 and access line may be used.

The MPLS packet detecting unit 20 detects the MPLS packets from the packets received from the console packet detecting unit 10. Of the MPLS packets, the MPLS control packets (label request/label distribution or the like) are transmitted to the path setting unit 80.

The acknowledgment packet detecting unit 30 detects the acknowledgment packet from the server responding to a connection request message from a client. The detected acknowledgment packet is transmitted to the path setting unit 80 and is then processed therein.

A packet buffer 50 temporarily accumulates the received packets.

A packet processing unit 40 accumulates the packets received from the acknowledgment packet detecting unit 30 to the packet buffer 50 and also reads the received packets to select an adequate transmission interface 120 with reference to a data forward table 60. The received packets read out from the packet buffer 50 are then transmitted to the selected transmission interface 120.

The data forward table 60 includes the information to determine the adequate transmission interface 120 from the destination address information of the packets to be transmitted.

The terminal control unit 70 analyzes a message included in the packet received from the console terminal (not illustrated) which is theoretically connected to the label switch router 200.

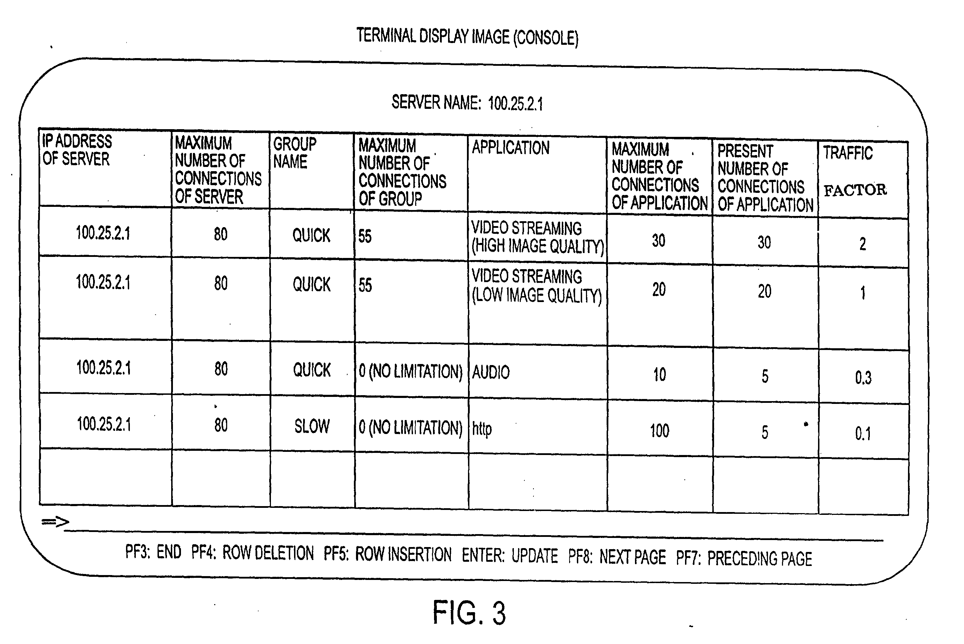

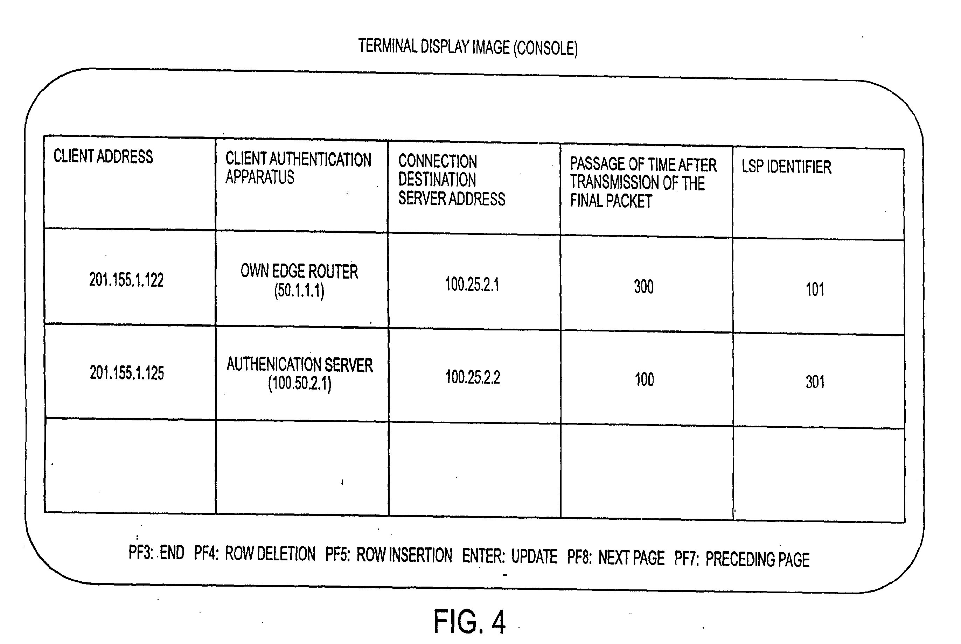

On the basis of a command included in the message, access is made to the server connection management unit 100 or/and a client connection management unit 110 to obtain information. Here, the information obtained is edited to a format, for example that shown in Fig. 3 or Fig. 4. Thereafter this information is displayed on the console terminal. Details will be explained later. Here, the label switch router 200 is assumed to be able to process IP packets.

The path setting unit 80 performs the LSP (Label Switch Path) connection process when the process to judge the possibility of connection to the server and bandwidth reservation are possible on the basis of the acknowledgment packets. Moreover, the LSP is also released, upon completion of communication between the server and client.

A connection judging process unit 90 judges whether connection between the client as the connection request source and the server is possible or not.

A server connection management unit 100 holds the upper limit value for client connections for each server into a memory or a large capacity storage device. A client connection management unit 110 executes management of the connecting condition of each client.

The label switch router 200 explained above executes the processes explained above using one or more CPUs and it may also execute the processes using a system LSI or the like.

A connection judging unit 150 is formed with inclusion of the connection judging process unit 90, server connection management unit 100 and the client connection management unit 110.

The label switch router 200 (Fig. 2) is formed as explained above and can be adapted to any of LSR1 to LSR4 (Fig. 1).

### (2) Detail Explanation of Operations of the Present Invention

Operation of each unit of the label switch router 200 will be explained.

### (a) Sharing process of received packets

The console packet detecting unit 10 receives the packets from the receiving interface 15. When there is a packet of which the transmission destination IP address is this label switch router 200 and this packet has a particular application port number, this packet is transmitted to the terminal control unit 70. This packet is processed in this terminal control unit 70.
The particular port number is the application for setting and displaying the maximum number of client connections to be connectable to the server and/or displaying the connecting conditions of clients. The other packets are transmitted to the MPLS packet detecting unit 20.

When the packet received from the console packet detecting unit 10 is the MPLS control packet (label request/label distribution, etc.), the MPLS packet detecting unit 20 transmits this packet to the path setting unit 80. Packets other than the MPLS control packet are transmitted to the acknowledgment packet detecting unit 30.

The acknowledgment packet detecting unit 30 transmits, when it has received the acknowledgment packet from the server, this packet to the path setting unit 80. Other packets are transmitted to the packet processing unit 40.

The packet processing unit 40 temporarily accumulates the received packet to the packet buffer 50. Here, the processes such as the priority transfer control of received packet or discard of packet are executed and the receiving packet to be transmitted next is determined. Thereafter, the packet determined is extracted from the packet buffer 50 and the adequate transmitting interface 120 is determined with reference to the data forward table 60 on the basis of the transmission destination address or the label value of the MPLS.

The received packet is transmitted via the determined transmitting interface 120. Generation and searching method of the data forward table 60 and determination of the transmitting interface 120 are the prior art and explanation thereof is omitted here.

### (b) Console packet receiving process

Next, an example of operation of receiving the packet from the console terminal (not illustrated) in the console packet detecting unit 10 will be explained. An administrator of the label switch router 200 logs in the router 200 of the present invention from the console terminal (for example, a remote workstation) to display the upper limit value of the number of clients connected to each server or to change the setting. In this case, the packet for requesting this display or change of setting is detected by the console packet detecting unit 10 and is then transferred to the terminal control unit 70. Moreover, the terminal control unit 70 may receives the packet for requesting the display or change of setting explained above from the console terminal theoretically connected via an independent line (75) (telephone line, xDSL or FTTH or the like).

The terminal control unit 70 executes the processes based on the message (such as a command) included in the packet for requesting display or change of setting. Shown as an example as the message (command) for requesting display, the data "show server name" (the server name may be any one of host name, URL or IP address) is inputted to the input line (second lowest line) of the lower part of the console terminal image (Fig. 3).

The terminal control unit 70 receives such command as the packet. This terminal control unit 70 further obtains the present connection judgment information of the server from the server connection management unit 100. In this case, the terminal control unit 70 edits, for example, the result obtained as shown in Fig. 3 and thereafter displays the edited result on the console terminal (workstation). In the example of display, the server name is the IP address (upper side of Fig. 3) and its value is 100.25.2.1.

This IP address is expressed in the IPv4 format but also may be expressed in the Ipv6 format. The formats IPv4 and Ipv6 have a difference in the length of the address but the present invention can be adapted to any format of the IPv4 and IPv6.

The server connection management unit 100 is independent as a single apparatus and may also be connected to the label switch router 200 via the network or bus.

The present "maximum number of connections of application" which is the setting value in the sixth column of the third line of the displayed screen may be changed to 20 from 10 (Fig. 3) by inputting, for example, the data "Update Line = 3, Col = 6, Verify = 10, Replace = 20". At the time of inputting the new data, the verify operand may be omitted.

As explained above, the desired data of the server connection management unit 100 can be set or updated. In the same manner, the terminal control unit 70 can freely set or change the data displayed in Fig. 3 with the method explained above in cooperation with the client connection management unit 110.

Moreover, the upper limit value of connection regarding the server can be set by adding the new data regarding the server to the line in the lower part of the table format in the display screen.

Here, it is also possible for the terminal control unit 70 to display the data based on the information of the server connection management unit 100 or update the data of the server connection management unit 100 with the full-screen image (Fig. 3 and Fig. 4) by utilizing the Tcl/Tk for providing the GUI (Graphical User Interface) which is provided in standard by the UNIX workstation.

Moreover, the terminal control unit 70 can display the processing result of the command on the display area of the console terminal, for example, as shown in Fig. 4 in cooperation with the client connection management unit 110 by inputting, as a command, the data "show clients connected to 201.155.01.122 and 201.155.01.115" from the display screen of the console terminal (Fig. 3).

### (c) MPLS packet receiving process

Next, an example of operation when the MPLS packet is received in the MPLS packet detecting unit 20 will be explained. The MPLS packet detecting unit 20 transfers the packets to the path setting unit 80, upon reception of the signaling packets such as the label request and label distribution (Label Map) which are the MPLS control packets and the path setting unit 80 processes the received signaling packets of MPLS. The processes of the signaling packets of MPLS are already known by those who are skilled in this art and these are not explained here.

The MPLS packet detecting unit 20 detects the MPLS packets and transmits the MPLS control packets among such MPLS packets to the path setting unit 80. The other packets are transmitted to the acquisition packet detecting unit 30. The path setting unit 80 executes the process of MPLS control packet regarding the label request, label distribution from the other routers received from the MPLS packet detection unit 20 and its own label switch router. Moreover, the path setting unit 80 also executes the bandwidth reservation based on the received MPLS control packet.

### (d) Acknowledgment packet receiving process

Next, the operation to receive the acknowledgment packet including the message indicating acknowledgment for connection from the server in the acknowledgment packet detecting unit 30 will be explained. The acknowledgment packet detecting unit 30 transmits this acknowledgment packet to the path setting unit 80, upon reception of the acknowledgment packet from the MPLS packet detecting unit 20.

Next, the path setting unit 80 stores the acknowledgment packet to the packet buffer 50 and also verifies, based on the acknowledgment packet, whether a response packet can be transmitted to the client CL from this server SV or not. As a practical example, the verification to check whether the connection may be permitted or not is requested to the connection judging process unit 90 using both addresses of the server SV and the client CL and the port number (application identification number) as the parameters.

The connection judging process unit 90 obtains, upon reception of the request for verification from the path setting unit 80, the information about the corresponding server SV from the server connection management unit 100 based on such parameters.

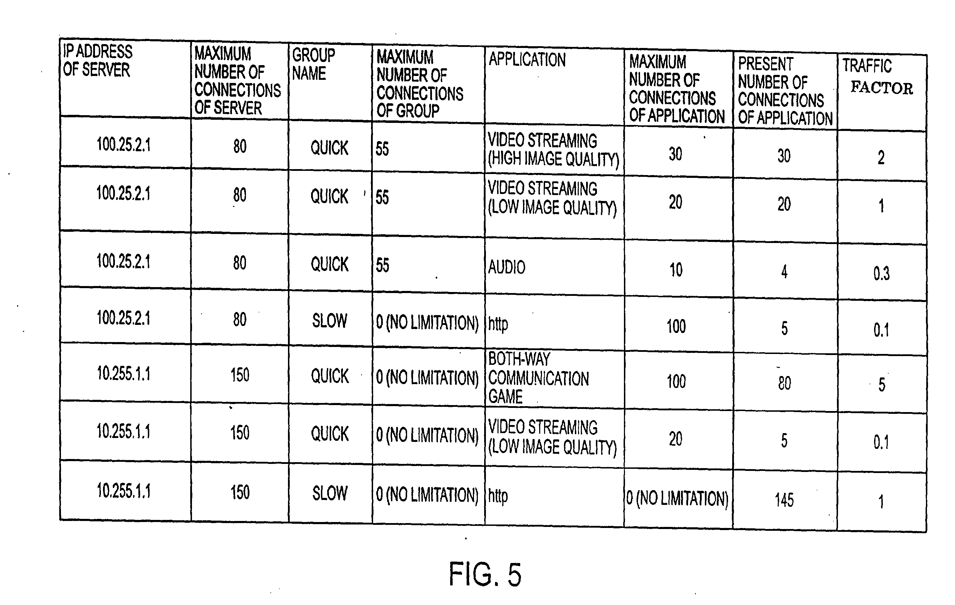

Fig. 5 shows an example of the storing format of the data stored in the server connection management unit 100. An example of the process will be explained with reference to this figure. The connection judging process unit 90 obtains the information corresponding to the server address (for example, transmission source address of the acknowledgment packet) from the server connection management unit 100. For example, it is assumed that an access is made to the server connection management unit 100 using 100.25.2.1 as the IP address of the server and thereby the corresponding four records have been obtained. These four records correspond to the records from the first record up to the fourth record in Fig. 5. Verification is executed in the following sequence to judge whether these records satisfy the preset condition or not.

### (i) Check of the maximum number of connections of server

In the present invention, the maximum number of connections to the server from the clients may be obtained by collecting the number of connections in unit of the IP address of each client. Otherwise, the maximum number of connections to the server from the clients may be obtained by collecting the number of connections in unit of the applications of the clients.

The maximum number of connections to the server from the clients having the server IP address of 100.25.2.1 shown in Fig. 5 is 80. The label switch router 200 rejects the connection request from the clients exceeding this value.

The number of clients being connected at present to the server (in the case of collecting the "present number of connections of application" for each IP address of the clients) or the "present number of connections of application" (in the case of collecting for each application) is respectively 59. Meanwhile, the "maximum number of connections of server" is 80. Therefore, it can be judged that the connection request from clients may be permitted. Here, it is assumed that an administrator of the label switch router 200 sets the "maximum number of connections of application" and "present number of connections of application" of Fig. 5 to any one of the number of clients or the number of applications.

### (ii) Total number of connections of group

When the information about the server application (for example, port number) is set in the acknowledgment packet, the upper limit number for connections to the server can also be limited for every application. If the information about the server application is not set in the acknowledgement packet, it is also possible to automatically select the preset application.

Here, the process is executed under the condition that "video stream(low image quality)" and "quick group" are set as the omitted value by assuming that the packet in which the application information is not yet set to the acknowledgment packet has been received. Moreover, it is also possible that the omitted values are previously set respectively for the "group name", "application" and "traffic factor" for each client or server.

Moreover, the information about the corresponding omitted value for each client or server may also be held in the client connection management unit 110. It is apparent for those who are skilled in this art that such process may be easily realize, although it is not explained here in detail.

According to Fig. 5, the maximum number of connections of the group to the quick group having the server IP address of 100.25.2.1 is 55. The number of clients being connected at present to the quick group (present number of connections of application) is 54. Therefore, it can be judged that connection requests from clients may be permitted.

### (iii) Total number of connections of application

According to Fig. 5, the maximum number of connections to the video streaming (low image quality) application of the group having the server IP address of 100.25.2.1 is 20 and the present number of clients being connected is 20. Therefore, it can be judged that a connection request of that application cannot be permitted.

### (iv) Traffic factor

The amount of information to be transferred by video streaming (high image quality) is apparently larger than that of video streaming (low image quality) and therefore the server load for video streaming (high image quality) is thought to be heavier. Accordingly, the "present number of connections of application" may be compensated depending on the load given to the server from each application by giving a so-called "traffic factor".

For example, when the video streaming (high image quality) gives a load of two times the load of video streaming (low image quality) to the server, a server load index can be indicated more accurately by setting the traffic factor of video streaming (high image quality) to "2" and the "traffic factor" of video streaming (low image quality) to "1".

According to Fig. 5, audio data is set to "0.3", while http to "0.1", but it is also possible to freely set a value of the "traffic factor" for each server and each application. Here, a value obtained by multiplying the traffic factor to the "present number of connections of application" may be used as the more accurate "present number of connections of application".

In this embodiment (Fig. 5), the traffic factor of the video stream (high image quality) is set to "2" but the "present maximum number of connections of application" is 30 but when compensation is executed using this "traffic factor", the value obtained exceeds the "maximum number of connections of group" of "55" and therefore the "traffic factor" is described only as a reference value.

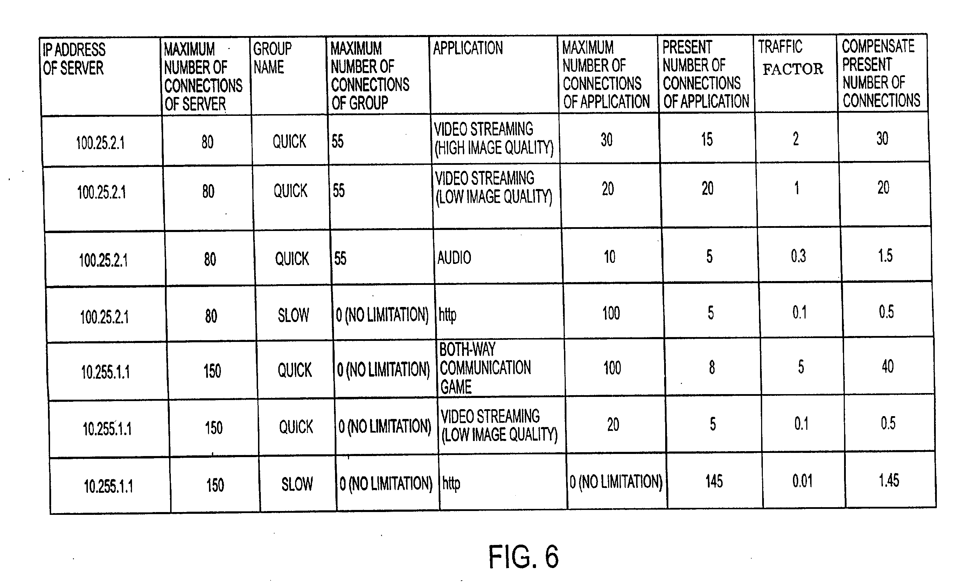

If the "traffic factor" is used, it is necessary to review, as required, respective setting values of the "maximum number of connections of application", "maximum number of connections of group" and "maximum number of connections of server". The data shown in Fig. 5 is set as the "compensated maximum number of connections of application" based on the traffic factor and moreover an example of the "present number of connections of application" is shown in Fig. 6.

### (v) From reception of the acknowledgment packet to transmission of the same packet when the acknowledgment packet is received with the procedures. of the items (a) to (d), processes are performed as explained below.

The connection judging process unit 90 in the label switch router 200 asks, before transmission of the acknowledgment packet received from the server to the client CL as the connection request source, for the path setting unit 80 to check whether the LSP (Label Switch Path) having the predetermined reserved bandwidth already exists between the edge routers LSR3 and LSR1 or not. Since the LSP is not connected during reception of the acknowledgment packet, data is never transmitted via such LSP.

When this LSP does not exist, a request is made to the path setting unit 80 to check whether the bandwidth reservation is possible or not between the edge routers LSR3 and LSR1. When bandwidth reservation is possible, the path setting unit 80 reserves the bandwidth between the edge routers LSR3 and LSR1 with the MPLS. This bandwidth reservation is also possible by utilizing the RSVP technique. Since application of the RSVP technique is already well known as the prior art, detail explanation is omitted here.

When bandwidth reservation by LSP or RSVP is completed, the corresponding "present number of connections of application" in the server connection management unit 100 is incremented by one (1).

Here, the connection judging process unit 90 notifies to the client connection management unit 110 the "client address", "connection destination server address", and "LSP identifier". The client connection management unit 110 holds the notified client address, connection destination server address and LSP identifier.

As the embodiment of holding of such data, such data may also be held on the memory in order to assure the high speed process thereof. Moreover, since the client connection management unit 110 receives the packet transmission message from the packet processing unit 40, the "passage of time after transmission of the final packet" corresponding to the client address of the packet transmitted at that time is reset (for example, "0" is set).

For example, when the transmission source address or transmission destination address of the packet transmitted is 201.155.01.115, the corresponding "passage of time after transmission of the final packet" is reset (100 is set in Fig. 4).

The client connection management unit 110 updates each "passage of time after transmission of the final packet" at a constant interval. For example, in Fig. 4, a value when 300 msec has passed after the packet having the address of client CL of 201.155.1.122 is transmitted from the server SV or the packet is transmitted to the server SV from the client CL is displayed.

When a preset time has passed, for example, when communication between the server and client is stopped for 3,000 msec, the client connection management unit 110 detects this condition and notifies it to the connection judging process unit 90. The connection judging process unit 90 sets the client address, server address and LSP identifier and asks for the path setting unit 80 to release the LSP thereof. The path setting unit 80 originates the MPLS control packet to execute the releasing process of LSP based on the LSP releasing request from the connection judging process unit 90.

Meanwhile, when a connection request from the client CL, as explained above, is refused (limited), upon reception of the acknowledgment packet, a message indicating that the connection is impossible may be returned to the client CL. Otherwise, no response may be sent. In any case, the connection from the client CL may be limited. The "passage of time after transmission of the final packet" can be monitored also for the data packet. If, communication of data packets has been stopped for a certain period, such communication may be completed and the LSP is released.

### (3) Other modifications

A method for preventing a server over-load condition has been explained above, but as another method, the present total bandwidth of the server is compared with an upper limit of the total bandwidth which may be used to judge whether new client connections are possible or not. Moreover, it is also possible to compare the present capability of the server with the limit of the capability of server by measuring the CPU utilization or a delay time, or the like.

Here, it is assumed that the upper limit value of the available total bandwidth, utilization limit of the CPU or delay time limit are stored by an administrator in the server connection management unit 100. The information about the present utilization of the CPU or the present total bandwidth may be stored in a part of the acknowledgment packet received from the server.

The connection judging process unit 90 is capable of judging possibility of the client connection based on the present CPU utilization included in the acknowledgment packet transmitted from the acknowledgement packet detecting unit 30 or the present total bandwidth.

### 1.3 Processing flow of label switch router

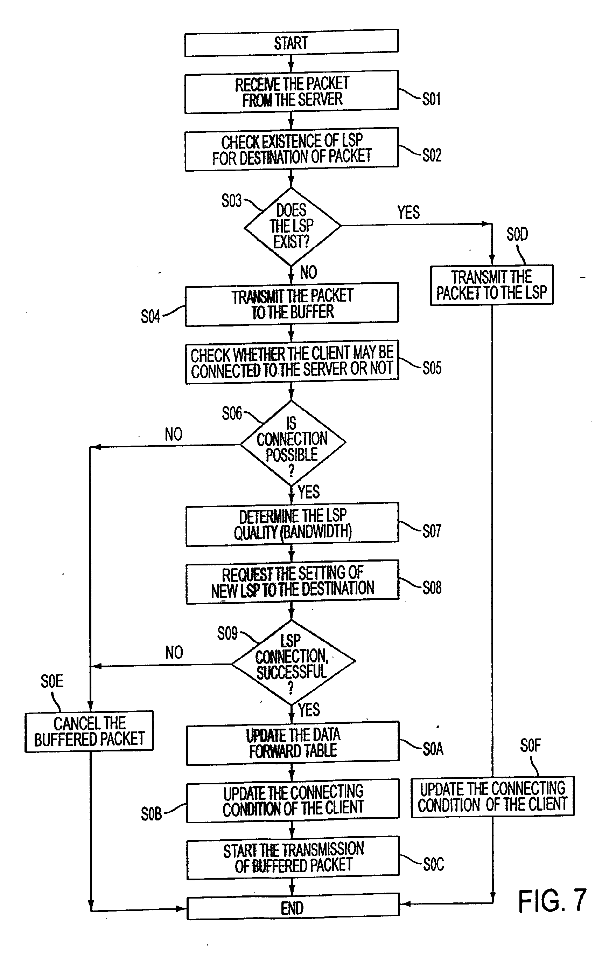

Next, the present invention will be explained with reference to the process flow of Fig. 7 and Fig. 2.

In Fig. 7, the acknowledgment packet detecting unit 30 receives the acknowledgment packet, in response to the packet including the connection request message, from the server SV in step S01. Thereafter, the acknowledgement packet detecting unit 30 transmits the acknowledgment packet to the path setting unit 80.

Insteps S02, S03 and S0D, the path setting unit 80 checks whether the LSP (Label Switch Path) exits between the edge routers LSR3 and LSR1 or not and whether the path thereof may be used or not. It is assumed that the path exists and this path may be set when the LSP is set, for example, between the edge routers LSR3 and LSR1 of Fig. 1 in steps S08 to S09 explained later. Namely, when the LSP is set in step S08, the process branches to step S0D in step S03. The packet received in step S01 is transmitted, in step S0D, by the packet processing unit 40 via the LSP.

In step S04, the acknowledgment packet received by the acknowledgment packet detecting unit 30 is transferred to the path setting unit 80. The path setting unit 80 stores the received acknowledgment packet to the packet buffer 50.

In steps S05 and S06, it is checked whether the connection request from the client may be connected to the server or not based on the acknowledgment packet received by the label switch router 200. In more practical, the path setting unit 80 notifies the information of the transmission destination address (client address) and the transmission source address (server address) of the acknowledgment packet received to the connection judging unit 90. This notification information may include information about the application which requests the connection, for example, video streaming (high quality) or the like. The connection judging process unit 90 reads the necessary information by making access to the server connection management unit 100 based on the notified information in order to judge whether it is possible or not to connect the client to the server. Conditions for judgment may be explained as follows.
(a) When the application (for example, corresponding to the port number) is notified, it is judged as the primary judgment that connection is possible under the condition that the present number of connections of the application is under the maximum number of connections of the corresponding application. Moreover, when the application is not notified, a predetermined application is considered as the designated application. When the "maximum number of connections of application" is set to zero (0), it is assumed that there is no limitation on the maximum number of connections of such application. However, the limitation on the maximum number of connections under the limitation of the upper level (for example, such as "maximum number of connections of group" or the like) is assumed to be valid.
(b) It is judged as the secondary judgment that the connection is possible when the total sum of the "present number of connections of application" belonging to the group is under the number of maximum connections of the group belonging to the application.
(c) Next, the present total number of connections of each application connected to the server is obtained. According to an example of Fig. 5, the present number of connections is assumed as 59 (30+20+4+5=59) in the server having the IP address of 100.25.2.1. Meanwhile, it is judged as the tertiary judgment that the connection is possible because the maximum number of client connections to be connectable to this server is 80.

Accordingly, since the connection is judged to be possible in the primary to tertiary judgments, the connection request of this client is acknowledged. Here, one (1) is added to the value of the "present number of connections of application" of the corresponding application. If the "traffic factor" is further designated, connection judgment may be done, considering a value of each "compensated present number of connections of application" as shown in Fig. 6.

Namely, the value of each "compensated present number of connections of application" × corresponding "traffic factor" is obtained. Thereby, it is also possible that the calculation is executed under the condition that the present total number of connections of client or the "present number of connections of application" is 52 based on the calculation, for example, of 15 * 2 + 20 * 1 + 5 * 0.3 + 5 * 0.1 = 52 from the beginning of Fig. 6 and the connection request from the client is judged to be possible or impossible through the primary to tertiary judgments explained above.

As another embodiment, an example of a format of the server connection management unit 100 considering the "traffic factor" is shown in Fig. 6. In Fig. 6, the "compensated present maximum number of connections of application" is added to Fig. 5.

The path setting unit 80 having obtained the result that the connection is possible from the judgment for connection in steps S05 to S06 transmits a label request to the edge routers LSR3 to LSR1 by utilizing the LDP (Label Distribution Protocol) provided by the MPLS and instructs, when the connection of the LSP (Label Switch Path) is set up, after waiting for judgment whether the LSP having reserved the bandwidth on the MPLS network, the start of transmission of the corresponding acknowledgment packet to the packet buffer 50.

If connection is impossible through the primary to tertiary judgments, or if the path having the reserved quality on the MPLS network cannot be set up, the path setting unit 80 branches to step S0E in order to cancel the relevant packet for the packet buffer 50.

In step S07, the path setting unit 80 or an administrator of the server connection management unit 100 can previously give the bandwidth reservation to be obtained on the MPLS network and the communication quality may be adequately changed depending on the communication contents and communication condition between the server and client. For example, when the bandwidth to be obtained on the MPLS network is assumed as 4Mbps, the path setting unit 80 determines to set the path (LSP) in the high image quality of 4Mbps.

However, for example, when the remaining bandwidth of the interface card of the edge router LSR3 is lowered less than a specified value (for example, less than 40Mbps or less than 20% thereof), the bandwidth obtained for the client who is using the interface card may be changed, for example, to 1.5 Mbps (intermediate image quality) from 4Mbps (high image quality).

An operator can set this specified value to the desired bandwidth. Moreover, such desired bandwidth value may be set to each client or each group.

In step S08, the path setting unit 80 issues a setting request of the path (LSP) in the image quality of 1.5 Mbps to a corresponding edge router of the MPLS network. As this setting request, the path of 1.5Mbps can be set utilizing the RSVP (resource ReSerVation Protocol). Moreover, it is also possible to use MPLS and RSVP in parallel. Namely, it is possible to selectively use the LSP provided with the LSR and the path in which the router provided with the RSVP function exists.

In step S09, a result of the LSP connection request originated from the path setting unit 80 is received. As a result, if the requested bandwidth cannot be obtained, the process branches to step S0E.

In step S0A, when the LSP can be connected between the edge routers LSR3 and LSR1, an entry (cache) having the address of a client as the transmission destination address is newly added to the data forward table 60. After the LSP connection, the data packet for distribution of contents to the client from the server is transmitted via the LSP when the packet processing unit 40 searches the data forward table 60 based on the label value given to this data packet.

In steps S0B and S0C, since the acknowledgment packet is stored in the packet buffer 50, this acknowledgment packet is transmitted via the LSP explained above. Here, one (1) is added to the value of the "present number of connections of application" of the corresponding application and transmission of such packet is notified to the client connection management unit 110. The client connection management unit 110 resets the "passage of time after transmission of the final packet" based on the address of corresponding client and sets, in the constant period, the passage of time after transmission of the final packet. In this case, if the passage of time after transmission of the final packet has exceeded the predetermined time (time out), the client connection management unit 110 notifies occurrence of time-out to the connection judging process unit 90 together with the corresponding LSP identifier. The connection judging process unit 90 notifies the received LSP identifier to the path setting unit 80 and the path setting unit 80 effectively utilizes the resources by releasing the LSP.

In steps S0D and S0F, the data packet received by the packet processing unit 40 is transmitted via the LSP and transmission of this packet is notified to the client connection management unit 110. The client connection management unit 110 resets the "passage of time after transmission of the final packet" based on the address of the corresponding client and sets the passage of time after transmission of the packet in the constant period.

Here, when the passage of time after transmission of the final packet has exceeded the predetermined time (time-out), the client connection management unit 110 notifies occurrence of time-out to the connection judging process unit 90 together with the corresponding LSP identifier. The connection judging process unit 90 notifies the received LSP identifier to the path setting unit 80 and the path setting unit 80 releases this LSP to effectively use the resources. Thereby, the process of the packet received in step S01 is completed.

In step S0E, the acknowledgement packet is discarded because the setting of the LSP has been impossible in step S06 or S09. Here, the process of the acknowledgment packet is completed. In this case, a message indicating the connection to the server has failed may be transmitted to the client. Moreover, the path setting unit 80 may transmit a message indicating that the connection to the server is cancelled to the client as the connection request source. The process of the packet received in step S01 is completed here.

### 2. Alternative Embodiments of the Present Invention

### 2.1 Differences between the first and alternative embodiments

### (1) Detection of connection request packet

In the first embodiment, possibility of connection to the server is judged to make reservation of the communication quality, upon reception of the acknowledgment packet from the server. However, in this alternative embodiment, possibility of connection to the server is judged when the label switch router of the present invention has received, from the client, the packet including a message for connection request to the server and when the connection to the server is possible, the communication quality is reserved between the label switch router (edge router) and another label switch router (edge router).

### (2) Authentication by the designated authentication apparatus

In the first embodiment, a client has been authenticated by the server, but in this alternative embodiment, the client is authenticated corresponding to each server by the edge router or the designated authentication apparatus.

### (3) Connection to an alternative server

In the first embodiment, the server for connection is not changed but in this alternative embodiment, connection to the server to be connected is attempted based on the packet including the connection request message from the client but it is also possible to connect to the predetermined alternative server if connection is impossible.

### (4) Selection of adequate contents server

Even servers having similar contents, image quality of the contents is different in some cases depending on the line speed. For example, where a xDSL line with a line speed of 1.5 Mbps and a FTTH linewith a line speed of 4Mbps are accommodated, the server SV1 prepares the contents of the intermediate image quality of 1.5Mbps, while server SV2 prepares the contents of high image quality of 4Mbps. When a client issues the connection request to server SV2 and requests low image quality contents (application), such connection request is switched to server SV1 for the connection. This alternative embodiment is different in such a point from embodiment 1.

### 2.2 Explanation where attention is paid to differences between the first and alternative embodiments

### (1) Outline of operations of label switch router

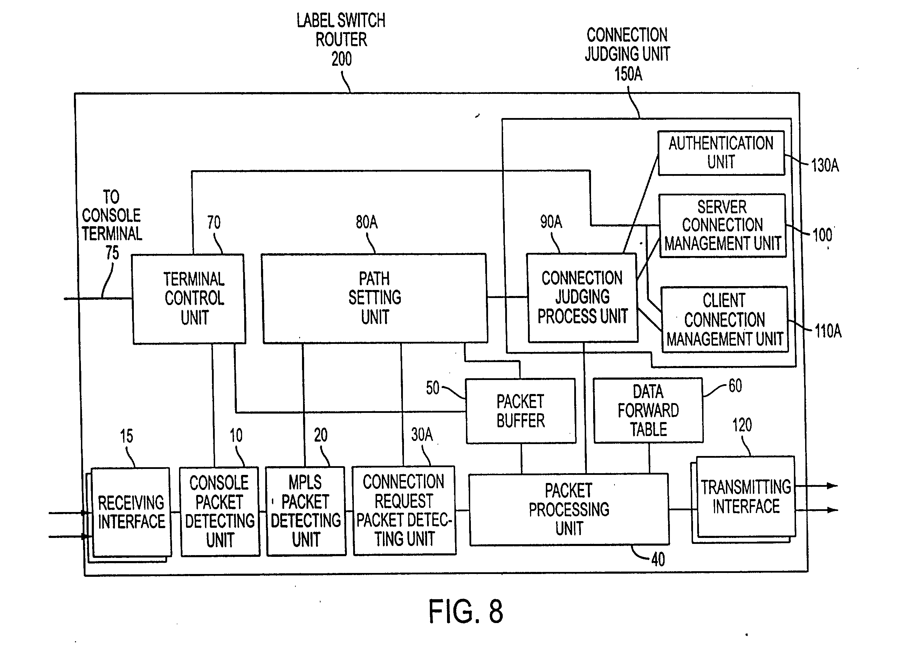

The alternative embodiments will be explained while the attention is paid to the differences between the first and alternative embodiments with reference to Fig. 8, Fig. 1 and Fig. 2.

A connection request packet detecting unit 30A, a path setting unit 80A, a connection judging process unit 90A, a client connection management unit 110A and a connection judging unit 150A are different and an authentication unit 130A is newly added. The connection judging unit 150A comprises the connection judging process unit 90A, the server connection management unit 100, the client connection management unit 110A and the authentication unit 130A.

In an example of the first embodiment, possibility of client connection to the server is judged upon reception of the acknowledgment packet by the edge router LSR3 from the server and the bandwidth between the edge router LSR3 (label switch router 200) and the edge router LSR1 is reserved.

In an example of an alternative embodiment the possibility of client connection to this server is judged when the connection request packet detecting unit 30A of the edge router LSR1 has received the packet including a message to request connection to the server from a client. When the connection is judged to be possible, the bandwidth between the edge routers (for example, to the edge router LSR3 from the edge router LSR1 of Fig. 1) is reserved.

Possibility of client connection to a server may be judged when the edge router LSR3 has received the packet including the connection request message to such server from the same client. In this case, connection of the LSP is made to the edge router LSR1 from the edge router LSR3.

If the connection request from a client to the server is cancelled, for example, due to the cause that the necessary bandwidth cannot be reserved, such connection can be set up to the alternative server. In this case, the edge router of the present invention controls the packet transfer regarding the communication to the server from such client so that the packet transfer is executed to the alternative server.

In the present example, while the relevant communication is continued, a new entry is generated in the data forward table 60 using the corresponding relationship between the transmission destination address and the transmission destination address to be transferred to the alternative server as the cache and the packet processing unit 40 executes the routing process to the alternative server by referring to such entry. In this case, the IP address of the transmission destination is changed to the address of the alternative server.

When the relevant communication is completed, the entry generated in the data forward table 60 is deleted. Thereby, the transfer process to the alternative server is completed.

In the connection request packet detecting unit 30A, detection of a packet including the connection request message may be executed for reception of a message for establishing a TCP session between the client and server.

For example, when "1" is set to the SYN (Synchronize Flag) of the code bit of the TCP segment format of the packet header transferred when the connection of the TCP virtual circuit is established between the client and server, the connection request packet detecting unit 30A recognizes a packet as the packet including the message for requesting connection to the server in order to start the communication.

Namely, the reception of the packet including the connection request message by the edge router LSR1 in this alternative embodiment can be realized when the acknowledgment packet is received as in the case of the first embodiment. As explained above, sure reception is executed in the same timing, the connection request packet detecting unit 30A detects the packet including the message for connection request to the server from a client and transmits the detected packet to the path setting unit 80A.

Moreover, an account and password may be included in the packet including such connection request message. In addition, information identifying the application (for example, a video stream of high image quality) can also be included thereto like the first embodiment.

The connection request packet detecting unit 30A detects the packet including the message for requesting the connection to the server from a client and extracts, from the packet including such connection request message, the account and password which are required for authentication of a user as the client. Moreover, such detecting unit 30A also extracts information, when it is included, about the application operating on the server.

When the application information is not included, it is possible to extract the predetermined omitted value (for example, a value in which the "video stream(low image quality)" and "quick group" are set) as the application and group. Here, the account and password and moreover extracted application information are transmitted to the path setting unit 80A and the packet including the connection request message can be stored in the packet buffer 50. On the occasion of authenticating the password, a key message for introduction of encryption is transmitted to the client from the edge router and the password encrypted based on such keyword is sent as the response to the edge router to enhance the security. This key message may be changed for every connection.

According to Fig. 8, the path setting unit 80A transmits the received account and password or the like to the connection judging process unit 90A to ask for authentication of this account. The connection judging process unit 90A accesses the client connection management unit 110A to obtain apparatus information which authenticates this client from the client address.

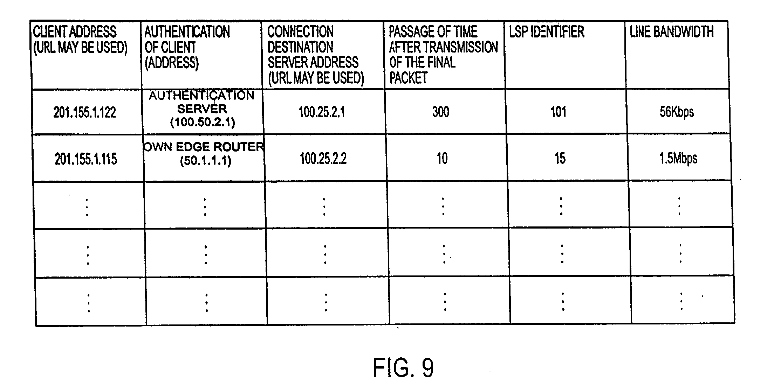

For example, according to Fig. 9, it can be understood that own edge router (label switch router) itself authenticates the server (100.25.2.2) from the client (201.155.1.115). Moreover, an authentication server (100.50.2.1) operates as the authentication apparatus when access is made to the server (100.25.2.1) from the client (201.155.1.122).

The connection judging process unit 90A requests the authentication to the authentication unit 130A using the account and password explained above when the authentication apparatus is its own label switch router. Moreover, when the authentication server is designated as explained above, the authentication is requested to such authentication apparatus. As the authentication apparatus, a RADIUS server may be used. When the authentication is completed successfully, the connection judging process unit 90A checks the maximum upper limit numbers of server connections as explained in the first embodiment. For details, refer to the first embodiment.

When the authentication is completed successfully and the maximum number of server connections is less than the upper limit value, it is checked whether the LSP can be connected or not between the edge router LSR1 and the edge router LSR3, for example, according to Fig. 1. When connection of the LSP is possible, the connection of LSP is established.

Here, a message indicating success of the authentication and connection is transmitted to the relevant client. Moreover, LSP connection success may be notified to the server.

With this notification, reservation of communication quality which is required for transmission of contents to the client from the server can be made. Moreover, the client can save, with such procedures, the time to wait for completion of reservation for the bandwidth reservation. Namely, the connection time to the server from the client can be shortened.

For details of common part of Fig. 2 and Fig. 8, refer to the first embodiment.

### (2) Explanation about process flow of label switch router

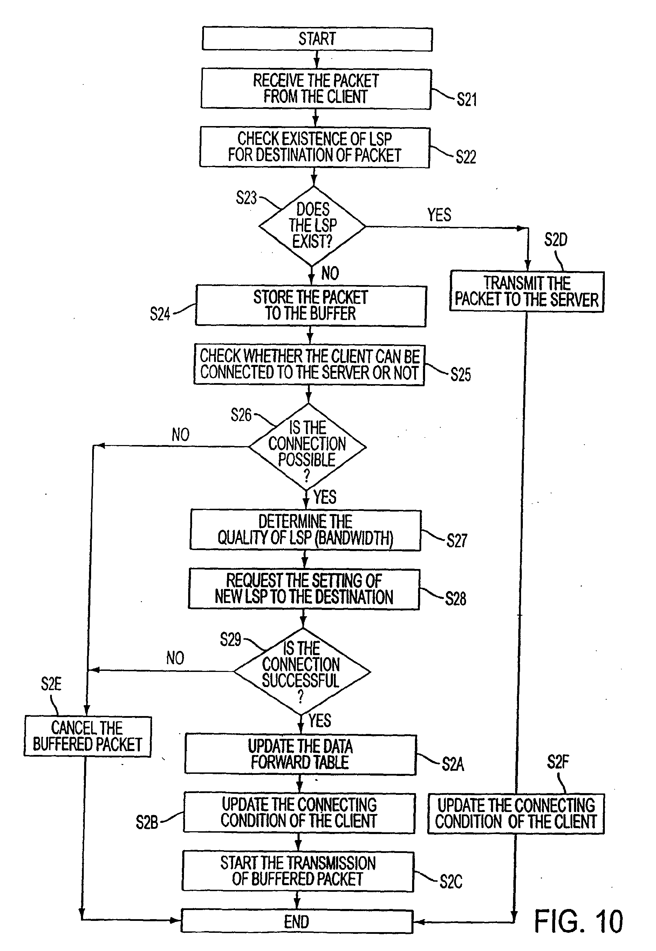

The essential difference between the first and alternative embodiments will be explained with reference to the process flows of Fig. 7(first embodiment) and Fig. 10 (alternative embodiment). According to Fig. 10, steps S21, S28 and S2D are different.

### (a) Step S21

In Fig. 7, when the label switch router 200 detects (step S01) the packet including a message for requesting the connection from the server, possibility of connection to the server is judged and the LSP is connected. Meanwhile, in Fig. 10, when the label switch router detects (step S21) the packet including a message for requesting connection to the server from the client, possibility of client connection to the server is judged.

Namely, in the first embodiment, possibility of connection is judged when the acknowledgement packet is received from the "server", while in the alternative embodiment, possibility is judged when the packet including the message for requesting connection, is received from the "client". This is a difference between the first and alternative embodiments.

### (b) Step S28

In Fig. 7, the new LSP is connected when the label switch router receives the acknowledgement packet from the server. In this case, the LSP is connected to the edge router LSR1 from the edge LSR3 with reference to Fig. 1.

However, in Fig. 10 illustrating an example of alternative embodiments, the LSP is connected to the edge router LSR3 from the edge router LSR1 which is different from the first embodiment. However, this difference is not the essential difference. Namely, alternative embodiment can also be adapted, like the first embodiment, to the edge routers LSR3 and LSR1.

When the present invention is adapted to the edge router LSR3, the LSP must essentially connected to the edge routers LSR3 to LSR1. When the present invention is adapted to the edge router LSR1, the LSP must essentially be connected to the edge routers LSR1 to LSR3.

### (c) Step 2D

In Fig. 7, the packet received from the server in step S01 is transmitted (step S0D) to the client on the LSP (directed toward the client), but in Fig. 10, the packet received from the client is transmitted to the server (step S2D) indicating a difference from Fig. 7.

The process flow will be explained below based on the differences explained above.

According to Fig. 10, in step S21, the connection request packet detecting unit 30A receives the packet including the message for requesting connection to the server from the client and thereafter transmits this packet to the path setting unit 80A.

In steps S22, S23 and S2D, the path setting unit 80 checks that the LSP (Label Switch Path) exists between the edge router LSR1 and the edge router LSR3 and whether such path can be used for not. In this case, it is assumed that there exists the path which is set when the connection of LSP is succeeded between the edge routers LSR1 and LSR3. Namely, in step S28, the process branches to step S2D in step S23 when the setting of the LSP is succeeded in step S28. In step S2D, the packet received in the step S01 is transmitted to the server by the packet processing unit 40 via the LSP.

In step S24, the packet including the connection request message received by the connection request packet detecting unit 30A is transmitted to the path setting unit 80A. The path setting unit 80A stores the packet including the received connection request message to the packet buffer 50.

In steps S25 and S26, whether the connection request from the client can be connected to the server or not is checked based on the packet including the received connection request message. In more practical, the path setting unit 80A provides the transmission source address (client address) and the transmission destination address (server address) of the packet including the received connection request message to the connection judging process unit 90A as the notification information.

This notification information may include information about the application for requesting the connection. For example, it may include the "video streaming (high image quality, or the like)". The connection judging process unit 90A accesses the server connection management unit 100 based on the notification information to read the information required to judge whether the client can be connected to the server or not. The judging method is essentially the same as that explained in the first embodiment.

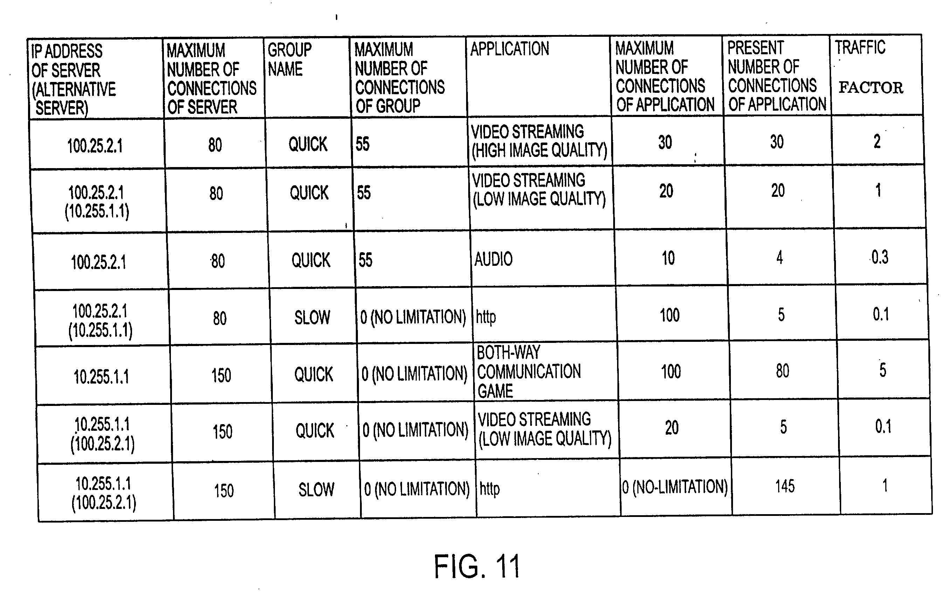

Moreover, in an alternative embodiment, when it is judged that the connection request from the client is not permitted (not connected), it is checked whether the connection can be extended or not to the alternative server (for example holding the same contents but is different in line speed) defined in the "server IP address (alternative server)" of Fig. 11 which shows the storing format of the information stored in the server connection management unit 100. This check method is determined in the same manner as the judgment for connection request to the IP address. For details, refer to the connection judging process unit 90 of the first embodiment and the explanation thereof.

Moreover, as shown in Fig. 9, it is possible that the intrinsic "line bandwidth" (line speed) can be given to each client. When the "line bandwidth" is given, the process may be executed as if it were conducted in the alternative server by dynamically selecting the server which provides the contents depending on the line speed. With the process as explained above, the selection items for dispersing the traffic to particular servers can be increased.

In this dynamic selection, the contents corresponding to the line speed may be provided corresponding to the "application" as shown in Fig. 11. The desired application can be selected with reference to this application information. The application may be set depending on the line speed. This application includes, for example, "video streaming 56Kbps (low image quality)", "video streaming 1.5 Mbps (intermediate image quality)", "video streaming 4Mbps (high image quality)" and "video streaming 8Mbps (ultra-high image quality)" or the like. The adequate "IP address of server" (left end of Fig. 11) is selected from the selected application corresponding to the line speed (Fig. 9) of the client and it can then be connected to the server.

When it is judged that connection is possible with the judgment for possibility of connection in steps S25 to S26, the path setting unit 80A transmits the path connection request to the edge router LSR3 from the edge router LSR1 utilizing the LDP (Label Distribution Protocol) or CR-LDP provided by the MPLS.

When connection of the LSP (Label Switch Path) is extended successfully after the judgment whether the path (LSP) for obtaining the bandwidth on the MPLS network is possible or not, the packet including the relevant connection request message is extracted from the packet buffer 50 and is then transmitted to the server.

If the connection is judged to be impossible through the primary to tertiary judgments or if the LSP for bandwidth reservation cannot be connected on the MPLS network, the path setting unit 80A instructs the packet buffer 50 to cancel the relevant packet. Thereby, the packet including the connection request message stored in the packet buffer 50 can be cancelled. In this case, the path setting unit 80A may transmit the message for rejecting connection to the server to the client as the connection request source.

In step S27, the information about the bandwidth reservation to be obtained on the MPLS network may be previously given by the path setting unit 80A or by an administrator of the server connection management unit 100. Moreover, the communication quality may be varied to provide adequate communication by depending on the communication contents and communication conditions between the server and client.

For example, if the bandwidth reservation on the MPLS network is assumed as 8 Mbps (ultra-high image quality), the path setting unit 80 determines to connect the LSP as a line speed of 8Mbps. However, the remaining bandwidth of a certain interface card of the edge router LSR1 becomes lower, for example, than the specified value (for example, 40 Mbps or less, or 10% or less of all bandwidths which can be reserved), then the application can be varied and the bandwidth to be used by the client via this interface card may be saved (for example, using 1.5Mbps (intermediate image quality) instead of 8 Mpbs). Thus the application is varied.

Alternatively it is also possible to previously set the desirable saved bandwidth reserved to each client or each group. Also when the bandwidth is varied as explained above, permission of client may be obtained. In addition, the client can enter the waiting condition until the communication condition is recovered without giving permission to the message for changing the bandwidth from the server.

In step S28, the path setting unit 80A issues the connection request of the path (LSP) in the line speed of 8Mbps to the corresponding edge router of the MPLS network. This request is also capable of realizing the bandwidth reservation of 8Mbps by utilizing the RSVP (resource Reservation Protocol).

In step S29, the result of the LSP setting request issued from the path setting unit 80A is received. As a result, if the requested bandwidth cannot be obtained, the process branches to step S2E.

In step S2A, when the LSP can be connected between the edge router LSR1 and the edge router LSR3, the entry (cache) in which the address of the client is described as the destination address is newly added to the data forward table 60. After the connection of the LSP, the data packet for distribution of contents to the client from server is transmitted via the LSP after the packet processing unit 40 searches the data forward table 60 based on the added label value of the packet.

In steps S2B and S2C, since the connection request packet is stored in the packet buffer 50, the packet including the connection request message is transmitted via the LSP and transmission of this packet is notified to the client connection management unit 110A. The client connection management unit 110A resets the "passage of time after transmission of the final packet" based on the address of the corresponding client and sets the passage of time after transmission of the final packet in the constant period.

Thereafter, when the passage of time after transmission of the final packet has exceeded the predetermined time (time out), the client connection management unit 110A notifies, together with the corresponding LSP identifier, the occurrence of a time-out to the connection judging process unit 90A. The connection judging process unit 90A notifies the received LSP identifier to the path setting unit 80A and the path setting unit 80A releases the LSP thereof and effectively utilizes the resources. The packet received in step S01 is then transmitted to the server.

In steps S2D and S2F, the data packet received by the packet processing unit 40 in step S21 is transmitted to the server via the LSP and transmission of this packet is then notified to the client connection management unit 110A. The client connection management unit 110A resets the "passage of time after transmission of the final packet" based on the address of the corresponding client and also sets the passage of time after transmission of the final packet in the constant period.

When the passage of time after transmission of the final packet has exceeded the predetermined time (for example, the time set by an operator)(time-out), the client connection management unit 110A notifies, together with the corresponding LSP identifier, the occurrence of a time-out to the connection judging process unit 90A. The connection judging process unit 90A notifies the received LSP identifier to the path setting unit 80A, the path setting unit 80A releases the LSP thereof to effectively use the resources. The process of the packet received is completed in step S21.

In step S2E, since the connection of LSP is not established in steps S26 or S29, the packet including the connection request message is cancelled. Here, the process of the packet including the connection request message is completed. In this case, a message notifying that connection to the server has failed may be transmitted to the client. Here, the process of the packet received in step S21 is completed.

The present invention also includes the construction described in the following additional notes.

According to the present invention, since the server does not allow the number of client connections exceed the upper limit value, each client can receive communication services with constant communication quality.

Moreover, if communication between the server and client stops for a constant period, the reserved bandwidth is released and therefore the communication resources can be used effectively.

Moreover, the maximum number of connections to the server from the client can be set or updated via console terminal operation.

## Claims

1. A router for routing an input packet, based on a destination address of the packet, the router comprising:
a connection judging unit for judging whether or not a number of connections to a server exceeds an upper limit value of clients to be connectable to said server, upon reception of a packet regarding a connection between said server and a client; and
a path setting unit for transmitting a message for reserving a bandwidth between two routers which are used for relaying packets between said client and said server when said connection judging unit judges that said connection is possible.

2. The router according to claim 1, wherein the packet regarding the connection includes a connection request message and is transferred to the server from said client.

3. The router according to claim 1, wherein the packet regarding the connection includes an acknowledgement message and is transferred to said client from said server.

4. The router according to claim 1, said connection judging unit includes a connection judging process unit and a server connection management unit,
wherein said connection judging process unit receives for comparison a maximum number of application connections regarding said server and a present number of application connections regarding said server from said server connection management unit in order to judge possibility for the connection of said client.

5. The router according to claim 1, said connection judging unit includes a connection judging process unit and a server connection management unit,
wherein said connection judging process unit receives for comparison a maximum number of application connections regarding said server and a present number of application connections regarding said server which has been compensated with a traffic factor from said server connection management unit in order to judge possibility for the connection of said client.

6. The router according to claim 1, said connection judging unit includes a connection judging process unit and a server connection management unit,
wherein said connection judging process unit receives for comparison a group to which said client belongs and a maximum number of connections of the group in order to judge possibility for a connection of said client.

7. The router according to claim 1, the connection judging unit includes a connection judging process unit and a server connection management unit,
wherein the connection judging process unit receives, from the client connection management unit, a message notifying that a packet is not received within a period during communication between the server and the client and releases a label switch path which has been used for the communication between the server and the client.

8. The router according to claim 2, the connection judging unit includes a connection judging process unit and a server connection management unit,
wherein the connection judging process unit transmits, when the connection is judged impossible, a connection request to an alternative server preset corresponding to the server.

9. The router according to claim 1, said connection judging unit includes a connection judging process unit and a server connection management unit,
wherein said connection judging process unit receives information regarding an apparatus for authenticating said client from said connection management unit to authenticate said client via said authentication apparatus.

10. The router according to claim 1, said connection judging unit includes a connection judging process unit and a server connection management unit,
wherein said connection judging process unit reads a bandwidth for said client from said connection management unit and selects and connects an adequate server based on said bandwidth.

11. A router for routing an input packet, based on a destination address of the packet, the router comprising:
a server connection management unit for managing an upper limit value of client connectionsfor each server; and
a terminal control unit for receiving a command to display a maximum number of client connections for a server designated from a console terminal, and displaying, to said console terminal, the upper limit value of client connections of said designated server from said server connection management unit.

12. A router for routing an input packet, based on a destination address of the packet, the router comprising:
a server connection management unit for managing an upper limit value of client connections for each server; and
a terminal control unit for receiving a command to change a maximum number of client connectionsfor a server designated from a console terminal and updating the maximum number of client connections to the upper limit value of connections of said designated server of said server connection management unit.

13. A router for routing an input packet, based on a destination address of the packet, the router comprising:
an acknowledgment packet detecting unit for detecting an acknowledgment packet from a server for allowing connection to said server from a client; and
a connection judging unit for judging whether a number of connections exceeds or not an upper limit value of clients to be connected by said server, upon reception of said acknowledgment packet.

14. A router for routing an input packet, based on a destination address of the packet, the router comprising:
a connection request packet detecting unit for detecting a packet requesting a connection to a server from a client;
a connection judging unit for judging a number of connections exceeds or not an upper limit value of client connections to be connectable to the server, upon reception of the connection request packet; and
a path setting unit for transmitting a message for reserving a bandwidth between two routers which are used for relaying packets between said client and said server when said connection judging unit judges that said connection is possible.

15. A method for connecting a server and clients, comprising the steps of:
transmitting, by a server, an acknowledgment packet to a client in response to a connection request packet;
judging whether a number of connections exceeds or not an upper limit value of clients to be connectable to said server, upon reception of a packet regarding a connection between said server and a client; and
transmitting a packet for reserving a bandwidth between a router and another router for relaying packets between said client and said server when said connection is judged possible in said judging step.
